# EUROPEAN PATENT APPLICATION

(11) **EP 1 662 764 A1**
(43) Date of publication of application: **31.05.2006**
(21) Application number: 04292834.1
(22) Date of filing: 30.11.2004
(51) Int. Cl.: H04M 3/22

(54) **Unified call log**

(71) Applicant: ALCATEL, 75008 Paris (FR)
(72) Inventor: Gass, Raymond, 67150 Bolsenheim (FR)
(74) Representative: LOUIS, PÖHLAU, LOHRENTZ

(57) **Abstract**

The invention concerns a method for providing a hybrid call log as well as a telecommunication network server (11) and a mobile telecommunication terminal (40) for executing this method. At a log control module (15) call logs (72, 74, 76) of the subscriber from a private telecommunication network (20), a public telecommunication network (30) and a mobile telecommunication terminal (40) are received. The format of at least one received call log is converted by the log control module (15) to a common format. Two or more call logs are merged to a hybrid call log which is displayed by display means (60).

## Description

The invention relates to a method for providing a call log as well as a telecommunication network server and a mobile telecommunication terminal for executing the method.

When calls are transmitted and received via a telecommunication network, a lot of call related information can be aggregated in a call log. Depending on whether an outgoing, an incoming answered or an incoming missed call is concerned, the call log may comprise a multitude of items, such as the line number, the type of call, digits dialed, caller ID data, phonebook name, date, time and duration of the call, and charges. Call logs which are readily available to the subscriber facilitate the management of telecommunication and enable many helpful user-friendly features, e.g., keeping track of missed calls which may be particularly important for telephone subscribers who are expected to respond to every incoming call.

Calls handled over a private telecommunication network, e.g., a PABX of a company or an internal communication network of a condominium, are conventionally registered in a call log managed by a server of the private telecommunication network (PABX = Private Automatic Branch Exchange).

Likewise, in a public telecommunication network, like GSM or UMTS, a central network-based server provides call logs comprising the subscribers' calls over the public telecommunication network (GSM = Global System for Mobile Communications; UMTS = Universal Mobile Telecommunications System).

For the case of soft phone applications, e.g., Young Electronic Specialties, Coral Springs FL 33065, U.S.A. (www.YES-Tele.com) offers a free network enabled software program which utilizes the telephone company's Caller ID signal, touch-tone DTMF, etc. for instant and automatic database retrieval of customer records before the phone is answered and automatic logging of all incoming and outgoing calls (DTMF = Dual Tone Multi-Frequency). All workstations on a LAN then have access to the call data that is kept in a shared data base on a central workstation (LAN = Local Access Network).

Many modern telephone sets automatically register calls in a call log. However, the storage space of a telephone set is limited and a power failure may result in the loss of the call log. Moreover, in the case a subscriber uses many telephone sets the call logs are distributed over several phones, for example, dialed numbers on one phone are not available on another phone.

US 2003/0185365 A1 describes how a call log related to the calls from and to different telephones of a home telephone network is managed by a central gateway in order to avoid these drawbacks. All incoming and outgoing calls have to pass the central gateway as it provides the interface to an external telephone line. This enables the gateway to register all telecommunication traffic in a universal call log accessible from all telephone sets of the home telephone network.

It is the object of the present invention to improve the provision of a call log.

The object of the present invention is achieved by a method of providing a subscriber of a telecommunication network with a call log, wherein the method comprises the steps of: receiving at a log control module call logs of the subscriber from a private telecommunication network, a public telecommunication network and/or a mobile telecommunication terminal; converting by the log control module the format of at least one received call log to a common format; merging by the log control module two or more call logs to a hybrid call log comprising call logs of the subscriber received from the private telecommunication network, the public telecommunication network and/or the mobile telecommunication terminal; and displaying the hybrid call log by display means.

The object of the present invention is further achieved by a telecommunication network server for providing a subscriber of a telecommunication network with a call log, the telecommunication network server comprising a log control module for receiving call logs of the subscriber from a private telecommunication network, a public telecommunication network and/or a mobile telecommunication terminal, converting the format of at least one received call log to a common format, merging two or more call logs to a hybrid call log comprising call logs of the subscriber received from the private telecommunication network, the public telecommunication network and/or the mobile telecommunication terminal, and transmitting data of the hybrid call log to display means for displaying the hybrid call log by the display means.

It is possible that the telecommunication network server providing the hybrid call log receives call logs via a wireless short-range interface like Bluetooth or a infrared interface, via a cable connected to the network or the terminal delivering the call log, via a public telecommunication network like GSM or UMTS, or via an other communication connection.

The object of the present invention is further achieved by a mobile telecommunication terminal for providing a subscriber of a telecommunication network with a call log, the mobile telecommunication terminal comprising a log control module for receiving call logs of the subscriber from a private telecommunication network, a public telecommunication network and/or the mobile telecommunication terminal, converting the format of at least one received call log to a common format, merging two or more call logs to a hybrid call log comprising the call logs of the subscriber received from the private telecommunication network, the public telecommunication network and/or the mobile telecommunication terminal, and transmitting data of the hybrid call log to display means for displaying the hybrid call log by the display means.

It is possible that the mobile telecommunication terminal providing the hybrid call log receives call logs via a wireless short-range interface like Bluetooth or a infrared interface, via a cable connected to the network delivering the call log, via a public telecommunication network like GSM or UMTS, or via an other communication connection.

A subscriber may communicate by means of a mobile telecommunication terminal, e.g., a PDA equipped with WiFi and GSM, over several different telecommunication networks (PDA = Personal Digital Assistant; WiFi = Wireless Fidelity). In their office communicating over WiFi and soft phone, the subscriber's calls and corresponding call log are handled by a central network exchange. Outside their office and on the company's premises roaming under WiFi technology, e.g., over HotSpot and VPN, the subscriber may not have access to all services and call logs would then be handled by their terminal (VPN = Virtual Private Network). On the road communicating over GSM, the corresponding call log is registered by the mobile telecommunication network. Looking at this scenario, the subscriber's call logs are distributed over different networks and terminals and at different locations, thus preventing use of the full potential of call logs.

The use of the invention makes it possible to introduce an improved way of providing a call log that overcomes the aforementioned drawback by providing a hybrid call log including a subscriber's call logs from different networks and terminals. The invention facilitates the management of telecommunication calls. If, e.g., a company employee in his office could not answer a call on the mobile telecommunication terminal because he has forgotten the mobile terminal in the car, the employee can detect the call in the hybrid call log on the screen of his office computer. Furthermore, it is no longer necessary that the subscriber has to remember the telephone number of a person he had called the other day from an other telephone set not available at the moment. He easily can look it up in the hybrid call log. This clearly simplifies the management of telecommunication calls. Returned from a business trip, the subscriber can bring a synchronized updated record of all the calls made during the trip over different networks to his office screen or the display of his mobile terminal.

Further advantages are achieved by the embodiments of the invention indicated by the dependent claims.

According to a preferred embodiment of the invention, the display means display each entry of the hybrid call log with specific features dependent on entry-related information. In particular, the entries originating from a private telecommunication network are displayed different from the entries originating from a public telecommunication network or the subscriber's mobile telecommunication terminal, e.g., by using different colors, icons or other visuals. The current state of a call, e.g., whether the call is/was outgoing, incoming, answered, missed, etc., is indicated by special features, like displaying the corresponding entry bold or underlined.

According to one embodiment of the invention, the hybrid call log is accessible by the subscriber via a web-based interface. The hybrid call log stored in a storage means of the server of the company's PABX may be not accessible to a subscriber who is out of office. Then the subscriber can gain access to the hybrid call log via the Internet, as the server or the storage means which holds the hybrid call log comprises a web-based interface for communication, e.g., by means of HTML and/or XHTML (XHTML = Extensible Hypertext Markup Language). Thus, the subscriber can view the hybrid call log from any location and at any time. It is preferred that the subscriber is admitted to access the hybrid call log after positive authentification only. A security circuit contained in the log control module blocks access to the log until a security protocol is passed. The security protocol could require a subscriber's communication endpoint or input/output (I/O) device to submit a password, or some other indication that access should be permitted.

It is possible that the call logs are received at the log control module as a response to a request originating from the log control module. When the private telecommunication network, the public telecommunication network and/or the mobile telecommunication terminal receive the request, they prompt a process that the corresponding call logs handled by the respective networks or terminal are sent to the requesting log control module via a communication connection. The log control module and/or the device comprising the log control module have a transceiver to transmit the request and to receive the call logs. It is possible that the request is triggered by the subscriber and/or that the log control module is adapted so that it automatically transmits a request, e.g., in regular time intervals, to update the hybrid call log.

Further, it is possible that the call logs which have been received and converted to a common format by the log control module are checked for duplicate entries. In cases where a call is handled, e.g., over roaming conditions with faulty connection, it may happen that, depending on the functionality of the subscriber's mobile terminal, both the subscriber's mobile terminal and the visited GSM network server register the same call. When the hybrid call log is generated, this single call would appear as two separate entries and confuse the subscriber. To avoid this flaw, duplicate entries are merged to a single entry in the hybrid call log. The log control module recognizes two entries as a duplicate entry if relevant entry items, for example, the date, time and duration of the call or the called or originating telephone number, are identical. The criteria which have to be checked by the log control module to identify a duplicate entry are preferably set to default values and can possibly be adjusted by the subscriber.

According to a further embodiment of the invention, a copy of the hybrid call log is made available to the mobile telecommunication terminal of the subscriber. This may be particularly important for subscribers who cannot easily establish a connection to a communication network to get access to the hybrid call log stored in a network server, e.g., a company's PABX. For example, a sales representative is usually attending on clients and is out of the office during the working week, often roaming in areas with limited availability of any telecommunication network. The only time he is at his office desk is on Fridays which is his in-house day to do the paperwork. At this day the employee triggers the updating of the hybrid call log administered by a communication network. Equipped with a copy of the updated hybrid call log stored in his mobile terminal, the sales representative can anytime refer to the copy of the hybrid call log stored in his mobile telecommunication terminal and is able to continue working properly even when he is no more connected to his company facilities.

It is possible that the telecommunication network server which provides a subscriber of a telecommunication network with a hybrid call log represents a network element of one of the networks, public or private, where the call logs of the subscriber originate. For example, the network server is a HLR, or exchange of a telecommunication network (HLR = Home Location Register). In that case the network server providing the hybrid call log does not form a separate independent device where the call log information from the different networks and/or terminals is gathered and processed but it functions at the same time as the network server of the private or public telecommunication network via which the subscriber handles his calls.

These as well as further features and advantages of the invention will be better appreciated by reading the following detailed description of presently preferred exemplary embodiments taken in conjunction with accompanying drawings of which:
- Fig. 1: is a block diagram of a system for providing a subscriber with a hybrid call log comprising a network server according to a first embodiment of the invention.
- Fig. 2: shows a block diagram of a log control module.
- Fig. 3: is a block diagram of a system for providing a subscriber with a hybrid call log comprising a network server according to a further embodiment of the invention.
- Fig. 4: is a block diagram of a system for providing a subscriber with a hybrid call log comprising a mobile terminal according to the invention.

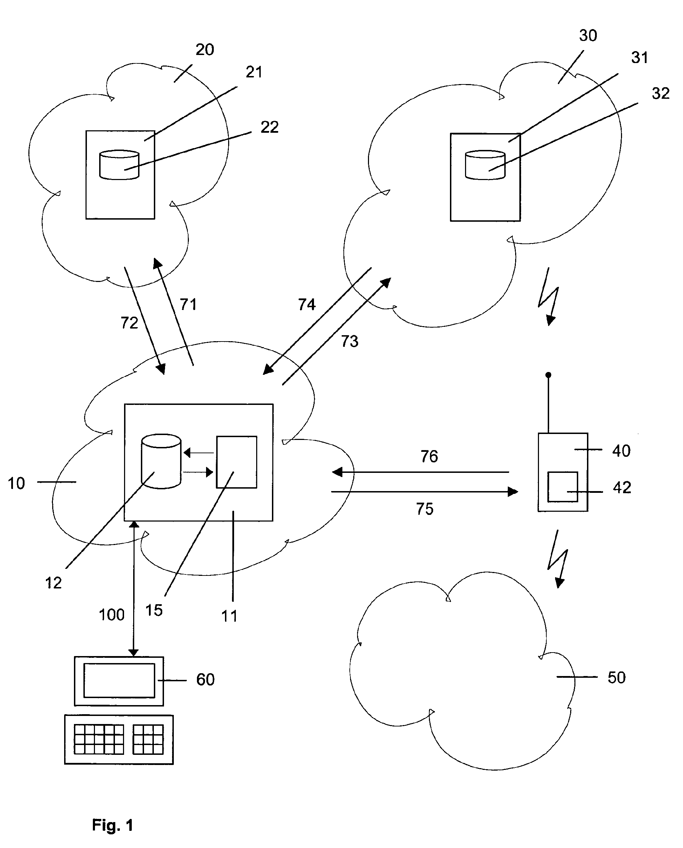

Fig. 1 is a schematic block diagram of a first embodiment of the present invention.

A subscriber transceives telecommunication calls over a private telecommunication network 20, a public telecommunication network 30, and a WLAN 50 by means of a mobile telecommunication terminal 40 (WLAN = Wireless Local Area Network).

The private telecommunication network 20 provides voice and/or data communication services, e.g., for the employees of a company or other kind of organization. The private telecommunication network 20 contains - dependent on the size of the network - one or more network elements 21, e.g., PABXs, providing switching and managing and administrating functionalities. It further comprises storage means 22.

The network element 21 consists of a hardware platform, a software platform basing on the hardware platform and several application programs executed by the system platform formed by the software and hardware platform. These application programs or a selected part of these application programs constitute a computer software product providing a call log as described in the following, when executed on the system platform. Further, such computer software product is constituted by a storage medium storing these application programs or said selected part of application programs.

When the subscriber is inside the company, he accesses the network element 21 by means of a softphone, i.e., a telephone set connected to a computer, or by means of the mobile telecommunication terminal 40 equipped with a WiFi interface. The calls of the subscriber handled over the network element 21 are registered in a call log managed by the network element 21 and stored in the storage means 22.

The mobile telecommunication terminal 40 is a mobile phone or cellular phone, preferably according to the GSM or UMTS standard and equipped with WiFi. But, it is also possible that the mobile terminal 40 is a PDA or other kind of pocket PC. Then such PDA comprises in addition to the other known functions of a PDA a communication unit for communicating via a radio interface with a cellular radio network, for example the aforementioned GSM or UMTS networks, and via a WiFi interface with a WLAN.

The mobile terminal 40 comprises a microprocessor with a plurality of peripheral units, a radio communication unit for communicating with a cellular communication network, a WiFi communication unit for communicating with a WLAN, a housing and several input and output devices arranged at the housing. Further, the mobile terminal 40 comprises a software platform and a plurality of application programs executed by the aforementioned hardware platform. The functionalities of the mobile terminal 40 are provided by the execution of this software by the aforementioned hardware platform.

From functional point of view, the mobile terminal 40 comprises control units, a short range wireless interface unit, a user interface unit, and the storage unit 42. The user interface unit contains the input and output means of the mobile terminal 40, for example, a keypad a liquid crystal display, a camera, a microphone and a loudspeaker. Further, the user interface unit comprises the software drivers used for controlling these devices.

When the subscriber has left his office, he may be roaming on the company's premises and communicate by means of his mobile terminal 40, e.g., under WiFi technology in the range of a WLAN 50, for example a HotSpot, i.e., a WLAN according to the WiFi and IEEE 802.11b standard, respectively, or a VPN. As he has access to a limited service only, calls are no longer logged by the private telecommunication network element 21 but by the terminal 40. The call log is stored in the storage means 42 of the terminal 40.

When the subscriber is outside the company and on the road, he handles calls by means of his mobile terminal 40 which is connected to a public telecommunication network 30 according to, e.g., the GSM or UMTS standard. The corresponding call log is operated by a public telecommunication network element 31 of the public telecommunication network 30 and stored in a storage means 32 of the public telecommunication network 30. Regarding the structure and functionality of the public telecommunication network element 31, it is referred to the description of the private telecommunication network element 21 as given above.

The telecommunication network 10, the private telecommunication network 20, the public telecommunication network 30, and the WLAN 50 are interconnected and connected to other networks so that telecommunication calls set off by the subscriber in one of the networks can be transmitted to an other network and that data can be exchanged among the networks. This is achieved by the standard techniques which are not described here but which are known to a skilled person working in the field of telecommunication. The private telecommunication network 20, the public telecommunication network 30, the mobile telecommunication terminal 40, and the WLAN 50 are not restricted to a single one of each kind but they can comprise one or more private telecommunication networks 20, one or more public telecommunication networks 30, one or more mobile telecommunication terminals 40, and one or more WLANs 50 without explicitly referring to this case.

The telecommunication network 10, which may be an independent network or a sub-network comprises a network server 11 with storage means 12 and a log control module 15. For example, the telecommunication network 10 is the Internet. The network server 11 consists of a hardware platform, a software platform basing on the hardware platform and several application programs executed by the system platform formed by the software and hardware platform.

The log control module 15 is adapted to receive via communication connections call log data 72, 74, 76 of the subscriber from the private telecommunication network 20, the public telecommunication network 30 and the mobile telecommunication terminal 40. It is possible that the log control module 15, before the call logs are received, transmits from a transmitter of the log control module 15 requests 71, 73, 75 to the networks 20, 30 and the terminal 40. The requests 71, 73, 75 are received by the networks 20, 30 and the terminal 40, where they initiate the transmission of the call log data 72, 74, 76 to the log control module 15. It is possible, that it is only after an authentification of the subscriber has been performed at the networks 20, 30 and the terminal 40 that the call log data 72, 74, 76 are transmitted to the log control module 15. Preferably, the transmission of the requests 71, 73, 75 is triggered by the subscriber and/or is executed in an automatic updating process of the log control module 15 which may be performed regularly at a certain time or after a certain time interval.

The call logs which have been received at the log control module 15 are then converted to a common format and merged to a hybrid call log comprising the call logs of the subscriber received from the networks 20, 30 and the terminal 40. Preferably, the converted entries of the call logs are checked for duplicate entries and merged to a corresponding single entry such that the hybrid call log finally does not contain duplicate entries. The hybrid call log is then stored in the storage means 12 and is made available to the subscriber upon request. The hybrid call log is displayed to the subscriber by means of display means 60 which may be an element of the network 10 or may be any other display means the hybrid call log can be transmitted to via a communication channel 100 and the subscriber has access to, e.g., the office desk-top screen or the display of the subscriber's mobile terminal 40.

For user-friendliness it is possible that each of the entries of the hybrid call log is displayed according to specific criteria. Entries can be arranged according to date and time of tha call and they can be displayed in colors indicating their call log source, e.g., hybrid call log entries which originate from the call log of the private telecommunication network 20 are indicated in red color while hybrid call log entries which originate from the call log of the public telecommunication network 30 are indicated in blue color. Furthermore, other information on the entries may be mirrored by specific types, fonts, icons or other visuals, e.g., missed and un-answered calls are set in bold face while incoming and outgoing calls are indicated by arrows to the right and the left, respectively.

It may also be possible that the subscriber can access the hybrid call log, download it to an I/O device and edit the entries, e.g., add some information about the telephone call, address changes, or rearrange the entries in groups. The downloaded hybrid call log data can be analyzed in any manner, e.g., by applying a suitable software application. But it is also possible that these and other ways of processing and analyzing the hybrid call log data may be contained and applied already in the log control module 15. The edited hybrid call log may then be sent back to the log control module 15 which prompts the storing of the edited hybrid call log in the storage means 12 so that the amendments added by the subscriber do not get lost and are available also at a later date.

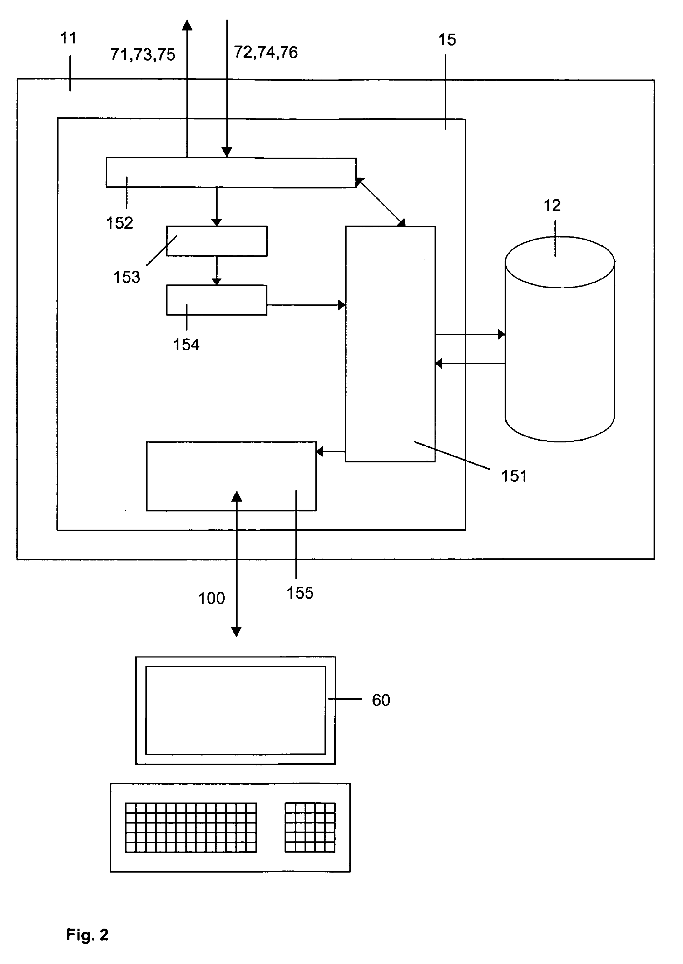

The set-up of the log control module of the invention is exemplified by hand of Fig. 2.

Fig. 2 is a diagram illustrating the structure of the telecommunication network server 11 as shown in Fig. 1. The telecommunication network server 11 comprises a log control module 15 and storage means 12. The operation of the log control module 15 is controlled by a control unit 151. The transmission of requests 71, 73, 75 to telecommunication networks and telecommunication terminals and the reception of call log data 72, 74, 76 from telecommunication networks and telecommunication terminals proceed via a network communication interface 152. As the received call log data 72, 74, 76 originate from different networks, e.g., a private company network and a public GSM network, and from different terminals, their data structure usually is not uniform. Therefore, the received call log data 72, 74, 76 are converted to a common format in the format conversion unit 153. The common format preferably is a standardized format and is selected such that no information contained in the call log data is lost and that the amount of call log data which has to be converted is kept to a minimum. The converted call logs are then merged to a single call log, a so-called hybrid call log, in the merging unit 154. The term "hybrid" refers to the fact that the merged call log consists of call logs from diverse sources.

Preferably, the merging process comprises a check for duplicate entries, i.e., if a single call has been logged in two or more of the subscriber's call logs, it will be transferred to the hybrid call log as a single entry only. A multiple registration of a single call in several call logs could happen if, e.g., the subscriber initiates an call outgoing via GSM and directed to the subscriber's office at the company where a colleague is temporarily working. Then the call is registered in the public telecommunication network element 31 and also in a call log kept by the company's PABXs. By eliminating duplicate entries, a subscriber perusing the hybrid call log will not be confused.

The hybrid call log is then stored in storage means 12. Usually, a subscriber will look at the hybrid call log on a display or as a printout. The hybrid call log is transmitted to the display means 60 via the communication channel 100. It is possible that the subscriber accesses the hybrid call log, e.g., via a web-based interface 155, and sends the hybrid call log data to the display means 60 where the hybrid call log data are displayed. It is also possible that the subscriber holds the hybrid call log data received via a web-based interface in the memory of an electronic device where he has instant access to the hybrid call log data. From this device the hybrid call log data may be sent to a printer, to a software application, etc. The subscriber can make amendments to the received hybrid call log data and have the amended hybrid call log stored in the storage means 12 of the telecommunication network server 11. Preferably, the log control module 15 demands an authorization of the subscriber before it enables access to the hybrid call log.

A subscriber is able to initiate the sending of a request 71, 73, 75 for call logs by triggering the control unit 151 of the log control module 15. The control unit 151 is adapted to react on a subscriber trigger by prompting the transmission of a request 71, 73, 75 to all relevant call log sources. Preferably, the log control module 15 demands an authorization of the subscriber before it prompts the transmission of a request 71, 73, 75 to all relevant call log sources. The list of relevant call log sources is defined manually by the subscriber and/or via an automatic telecommunication process related to the subscriber's log-in to a call log source and reported to the log control module 15. By means of this list the log control module 15 is enabled to transmit a request 71, 73, 75 to relevant telecommunication elements storing the subscriber's call logs.

The call log module 15 and its functionality can be located in any network a subscriber is subscribed to, in a network especially adapted to provide a hybrid call log, or a mobile telecommunication terminal used by a subscriber for telecommunication.

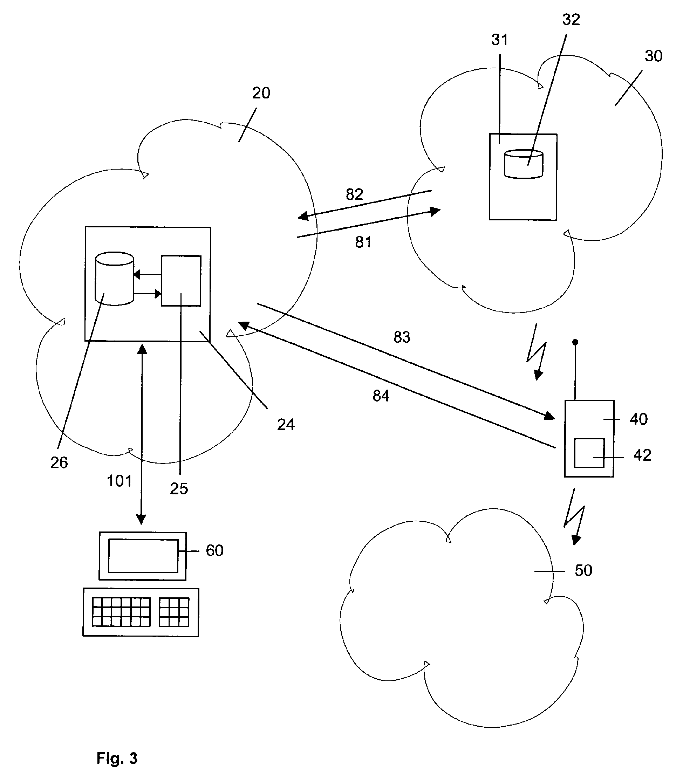

A further embodiment of the invention is exemplified by hand of Fig. 3.

Fig. 3 shows the private telecommunication network 20, the public telecommunication network 30, the mobile telecommunication terminal 40, and the WLAN 50. The private telecommunication network 20 comprises a network server 24 with storage means 26 and a log control module 25. The log control module 25 is adapted to receive via communication connections call log data 82, 84 of the subscriber from the public telecommunication network 30 and the mobile telecommunication terminal 40. The public telecommunication network 30 is, e.g., a GSM or UMTS network and comprises the network server 31 with the storage means 32. The mobile telecommunication terminal 40 is, e.g., a PDA adapted to communicate via WiFi and GSM and comprises storage means 42.

A subscriber transceives telecommunication calls over a private telecommunication network 20, a public telecommunication network 30, and a WLAN 50 by means of a mobile terminal 40. The subscriber's calls handled over the private telecommunication network 20 and the public telecommunication network 30 are registered in call logs stored in the storage means 26, 32 of the respective network elements 24, 31. The subscriber's calls handled over the WLAN 50 are registered in a call log stored in the mobile terminal storage means 42.

The hybrid call log is provided by the log control module 25 contained in the private telecommunication network 20. Therefore, the private network element 24 has a twofold functionality with respect to call logs: to administer the call log of the subscriber's calls made via the private telecommunication network 20, and by means of the log control module 25 to generate and provide a hybrid call log comprising the call logs of the subscriber contained in the private telecommunication network 20 itself and the call logs received from the public telecommunication network 30 and the mobile telecommunication terminal 40. The process is initiated by the transmission of requests 81, 83 for call logs sent from the log control module 25 to the public telecommunication network 30 and the mobile telecommunication terminal 40. In response, the log control module 25 receives call logs 82, 84 from the public telecommunication network 30 and the mobile telecommunication terminal 40. The call log of calls handled over the company's PABXs are readily available to the log control module 25 from the storage means 26 and need not be transmitted via external communication connections.

The task of the log control module 25 is to bring the call logs to a common format, preferably to the format used by the company's PABXs, and to merge the converted call logs to a hybrid call log as already described for the log control module 15 of Fig. 1 and Fig. 2. The hybrid call log is then stored in the storage means 25 and is provided to the subscriber by means of display means 60, as already described for the log control module 15 of Fig. 1 and Fig. 2. The communication connection 101 serves a transmission channel.

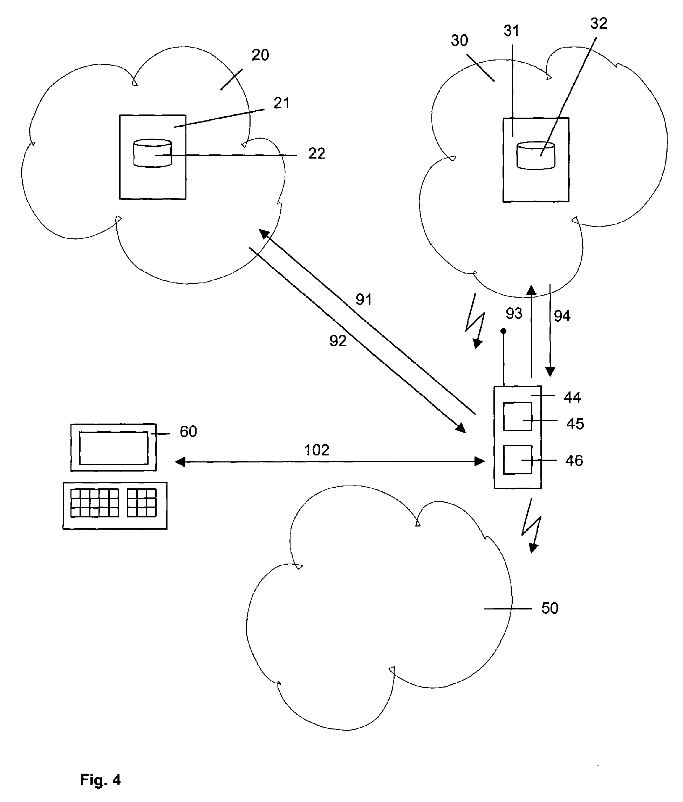

A further embodiment of the invention is exemplified by hand of Fig. 4.

Fig. 3 shows the private telecommunication network 20, the public telecommunication network 30, a mobile telecommunication terminal 44, and the WLAN 50. The private telecommunication network 20 contains the network element 21 with the storage means 22. The public telecommunication network 30 is, e.g., a GSM or UMTS network and comprises the network element 31 with the storage means 32.

The mobile telecommunication terminal 44 is, e.g., a PDA adapted to communicate via WiFi and GSM and comprises storage means 46 and a log control module 45. The log control module 15 is adapted to receive via communication connections call log data 92, 94 of the subscriber from the private telecommunication network 20 and the public telecommunication network 30. The structure of the WLAN 50 is according to the description of Fig. 1 and Fig. 3.

A subscriber transceives telecommunication calls over the private telecommunication network 20, the public telecommunication network 30, and the WLAN 50 by means of the mobile terminal 44. The subscriber's calls handled over the private telecommunication network 20 and the public telecommunication network 30 are registered in call logs stored in the storage means 22, 32 of the respective network elements 21, 31. The subscriber's calls handled over the WLAN 50 are registered in a call log stored in the storage means 46 of the mobile telecommunication terminal 44.

The hybrid call log is provided by the log control module 45 contained in the mobile telecommunication terminal 44. Therefore, the mobile telecommunication terminal 44 has a twofold functionality with respect to call logs: to administer the call log of the subscriber's calls made via the WLAN 50, and by means of the log control module 45 to generate and provide a hybrid call log comprising the call logs of the subscriber contained in the mobile telecommunication terminal 44 itself and the call logs received from the private telecommunication network 20 and the public telecommunication network 30. The process is initiated by the transmission of requests 81, 83 for call logs sent from the log control module 45 to the private telecommunication network 20 and the public telecommunication network 30. In response, the log control module 45 receives call logs from the private telecommunication network 20 and the public telecommunication network 30. The call log of calls handled over the WLAN 50 is readily available to the log control module 45 from the storage means 46 and need not be transmitted via external communication connections.

The task of the log control module 45 is to bring the call logs to a common format, preferably to the format used by the mobile telecommunication terminal 44, and to merge the converted call logs to a hybrid call log as already described for the log control module 15 of Fig. 1 and Fig. 2. and the log control module 25 of Fig. 3. The hybrid call log is then stored in the storage means 46 and is provided to the subscriber by means of display means 60, as already described for the log control module 15 of Fig. 1 and Fig. 2. and the log control module 25 of Fig. 3 The communication connection 102 serves a transmission channel. The display means 60 may be, e.g., an integrated display of the terminal 44 or it may be an external desk-top computer screen.

## Claims

1. A method of providing a subscriber of a telecommunication network (10, 20, 30, 50) with a call log,
**characterized in**
**that** the method comprises the steps of:
receiving at a log control module (15, 25, 45) call logs (72, 74, 76, 82, 84, 92, 94) of the subscriber from a private telecommunication network (20), a public telecommunication network (30) and/or a mobile telecommunication terminal (40);
converting by the log control module (15, 25, 45) the format of at least one received call log to a common format;
merging by the log control module (15, 25, 45) two or more call logs to a hybrid call log comprising call logs of the subscriber received from the private telecommunication network (20), the public telecommunication network (30) and/or the mobile telecommunication terminal (40); and
displaying the hybrid call log by display means (60).

2. The method of claim 1,
**characterized in**
**that** the display means (60) display each entry of the hybrid call log with specific features dependent on entry-related information, in particular dependent on the log source of the entry.

3. The method of claim 1,
**characterized in**
**that** the hybrid call log is accessible by the subscriber via a web-based interface (155).

4. The method of claim 1,
**characterized in**
**that** the method comprises the further step of sending from the log control module (15, 25, 45) a request (71, 73, 75, 81, 83, 91, 93) for call logs of a subscriber to the private telecommunication network (20), the public telecommunication network (30) and/or the mobile telecommunication terminal (40).

5. The method of claim 4,
**characterized in**
**that** a trigger by the subscriber and/or an updating process of the log control module (15, 25, 45) initiates the sending of the request (71, 73, 75, 81, 83, 91, 93).

6. The method of claim 1,
**characterized in**
**that** the method comprises the further steps of checking the received call logs (72, 74, 76, 82, 84, 92, 94) converted to a common format for duplicate call log entries and merging the duplicate call log entries to a single call log entry.

7. The method of claim 1,
**characterized in**
**that** the method comprises the further step of making a copy of the hybrid call log locally available to the mobile telecommunication terminal (40) of the subscriber.

8. A telecommunication network server (11, 24) for providing a subscriber of a telecommunication network (10, 20, 30, 50) with a call log,
**characterized in**
**that** the telecommunication network server (11, 24) comprises a log control module (15, 25) for receiving call logs (72, 74, 76, 82, 84, 92, 94) of the subscriber from a private telecommunication network (20), a public telecommunication network (30) and/or a mobile telecommunication terminal (40), converting the format of at least one call log to a common format, merging two or more call logs to a hybrid call log comprising call logs of the subscriber received from the private telecommunication network (20), the public telecommunication network (30) and/or the mobile telecommunication terminal (40), and transmitting data of the hybrid call log to display means (60) for displaying the hybrid call log by the display means (60).

9. The method of claim 8,
**characterized in**
**that** the telecommunication network server (11, 24) is a network element of a private telecommunication network (20) or a public telecommunication network (30) which contains a subscriber data base storing call logs of the respective private or public telecommunication network (20, 30).

10. A mobile telecommunication terminal (40) for providing a subscriber of a telecommunication network (10, 20, 30, 50) with a call log,
**characterized in**
**that** the mobile telecommunication terminal (40) comprises a log control module (45) for receiving call logs (92, 94) of the subscriber from a private telecommunication network (20), a public telecommunication network (30) and/or the mobile telecommunication terminal (40), converting the format of at least one received call log to a common format, merging two or more call logs to a hybrid call log comprising the call logs of the subscriber received from the private telecommunication network (20), the public telecommunication network (30) and/or the mobile telecommunication terminal (40), and transmitting data of the hybrid call log to display means (60) for displaying the hybrid call log by the display means (60).
